# EUROPEAN PATENT SPECIFICATION

(11) **EP 0 512 114 B1**
(45) Date of publication and mention of the grant of the patent: **04.06.1997**
(21) Application number: 91902783.9
(22) Date of filing: 25.01.1991
(51) Int. Cl.: G01D 15/34, B41M 5/00, B41M 5/124

(54) **SHEET FOR RECORDING**
REGISTRIERPAPIER
FEUILLE POUR ENREGISTREMENT

(30) Priority: 25.01.1990 JP 15644/90
(43) Date of publication of application: 11.11.1992
(73) Proprietor: SANSUI CO., LTD., Saitama 330 (JP)
(72) Inventor: KUROYANAGI, Norio, Bunkyo-ku, Tokyo 113 (JP); SAKAI, Mamoru, Urawa-shi, Saitama 336 (JP)
(74) Representative: Mallalieu, Catherine Louise
(86) International application number: PCT/JP91/00079
(87) International publication number: WO 91/11686

(56) References cited:
- DE-A- 2 431 371
- GB-A- 2 173 225
- JP-A-50 008 612
- JP-A-62 220 381
- JP-A-62 220 382
- JP-A-63 034 177
- JP-B-47 035 030
- US-A- 4 330 785

## Description

### TECHNICAL FIELD

The present invention relates to recording sheets for use on tachographs (recording tachographs), dusk meters (electrocardiographs) and other measuring instruments and, more particularly, to a recording sheet printable with an inkless recording pen (stylus).

### BACKGROUND ART

A recording sheet printable with a stylus is made by forming an opacifying layer on a colored sheet and the printing effect is achieved by the removal of or by imparting a light transparency to a part of the opacifying layer by a stylus. Various types of sheets are known in the art.

Sheets printed by the removal of an opacifying layer by a stylus are made by applying lacquers containing film forming components, such as nitrocellulose or cellulose acetate on a black-colored paper and opacifying the coating to constitute an opacifying layer (e.g., Japanese Published Patent Publications Nos. 34-8163 and 41-19274) and also by applying white coating containing titanium dioxide pigment or the like on a black-colored paper (e.g., Japanese Published Utility Model Publication No. 39-33446). These recording types of recording sheets perform the recording by local scraping of the surface white coating and disclosing the underlying black surface by a stylus which is moved in response to an electrical signal.

As a method to impart transparency with a stylus, there is known the formation of a light diffusion layer and a layer embodying solvent containing capsules on a colored paper (Japanese Patent No. 520631). This type of recording paper performs the recording by breaking capsules with the stylus moved in response to an electrical signal and releasing solvents therein to permeate into the light diffusion layer. Thus, the light diffusion layer is locally made transparent and hence the underlying color of the colored sheet is disclosed.

Among the former processes, the recording sheet that uses lacquers employs low boiling point solvents such as ketones (for example, acetone), alcohols (for example, methanol) or the like to dissolve film forming components such as nitrocellulose or cellulose acetate and obviously is attended by the risk of fire and explosion hazards in the coating process. The condition is also detrimental to the working environment as the solvents evaporate into the air. Another difficulty inherent to the process is that the lacquer coating must be subjected to a prolonged drying at a low temperature or a mild heating under an optimum humidity to opacify the lacquers, but the situation is quite adverse to the improvement of productivity. Also the recording paper that is prepared by applying a white coating among the former processes has a poor appearance due to a coarse surface and is deficient in print definition and printability though the whitening process is eliminated.

The recording sheet made by the latter process requires definite breakage of capsules by a stylus and involves the problem of slow printing speed and poor storage stability owing to the discoloration of the printed sheet.

As a process similar to that using lacquers as above, U.S. Patent No. 2739909 discloses a process by which a mixture is prepared by first introducing a W/O type emulsifier into a resinous organic solution in which PMMA is dissolved and then adding water under agitation to disperse micron size water droplets therein and the recording sheet is prepared by applying the mixture on a colored sheet and drying. By the U.S. Patent the solvents first evaporate in the drying process and a coating film of PMMA which embodies dispersed water droplets therein is formed. And then, when water in the droplets evaporates, the white opacifying layer is formed in which the voids is left in the polymer coating film.

DE-A-2431371 describes a recording material which has a translucent substrate and opaque recording layer(s) which become transparent under recording pressure, containing embedded coloured particles, which ensure optical contrast between the transparent and unchanged parts of the layer in reflected and transmitted light.

### DISCLOSURE OF THE INVENTION

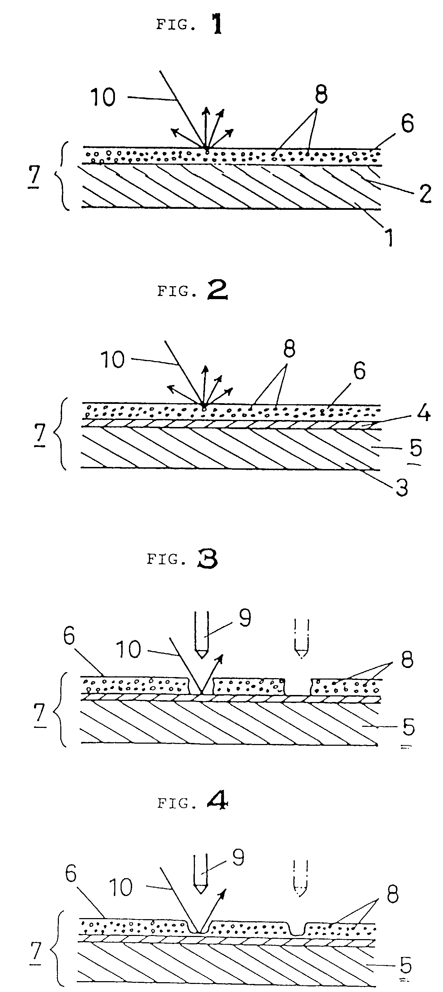

This invention has an object to obtain commercially usable recording sheets, which can be produced under a safe condition and at a highly efficient of productivity. Recording sheets 7 according this invention as illustrated in Figures 1 and 2 are made by applying an opacifying compound on colored sheets 2, 5 to form opacifying layers 6. The opacifying compound is prepared by mixing an aqueous suspension, in which polymer particles 8 embodying voids therein are dispersed, with an aqueous base vehicle (a solution or dispersion of a coating film forming component which uses water as a solvent or dispersing medium, same definition hereinafter). In the present description, although the terminology "aqueous opacifying compound" has been used, it means an opacifying compound using water as a solvent.

The color sheets 2 and 5 use paper, synthetic paper or plastic films as their substrates and colored with inks, pigments, dyestuffs or the like either by means of impregnation of or kneading into the substrate (colored sheet 2 in FIG. 1) or by coating the substrates with coloring materials (colored sheet 5 in FIG. 2). Coloring materials such as inks, pigments, dyestuffs and so on are usually black in color but the use of coloring materials of other colors such as red or the like is permissible.

Plastic films such as polyester film, polyvinylchloride film, polyvinylidene chloride film, poly (meta) acrylate ester film, polycarbonate film, polyethylene film, polypropylene film, etc., can be used.

The polymer particles 8 embodying voids therein are disclosed in Japanese Laid-Open Patent Publications Nos. 56-32513, 60-69103, 60-223873, 61-87734,. 61-185505, 62-127336, 63-110208, 63-135409, 63-213509 and so on, and are now commercially available on the market under the product names such as, Ropaque OP-42, OP-62 (manufactured by Rohm and Haas Co., Ltd.), Ropaque OP-84J (manufactured by Japan Acrylic Chemical Co., Ltd.), Voncoat PP-1000, PP-1001S, PP-2000 and PP-1100 (manufactured by Dainippon Ink & Chemicals, Inc.), JSRSX-862(A) and SX-850(B) (manufactured by Japan Synthetic Rubber Co., Ltd.), and Expancel WU#642 (manufactured by Expancel Corp. and Kemanobel Corp., Sweden). It is desirable that the product has a core component (core) comprising homopolymer or copolymer of methacrylic acid and a sheathing component (shell) comprising homopolymer or copolymer of styrene monomer.

As the manufacturing method thereof, the following processes are known: (I) incorporation of a blowing agent in polymer particles and forcing the blowing agent to expand; (II) enclosure of volatile substance such as butane or the like in polymers and forcing it to expand by gasification; (III) enclosure of gas in melted polymers by blowing thereon gas jet of air, etc. (IV) embodiment of alkali swellable substance such as carboxylic acid polymer or the like inside polymer particles and expansion thereof by the addition of alkalis, (V) preparation of W/O/W type monomer emulsions and polymerization thereof, (VI) embodiment of acid swellable polymers such as amine polymers or the like in polymer particles and expansion thereof with acids, (VII) constitution of voids by embodiment of hydrophobic solvents such as toluene, hexane and so on in polymer particles, (VIII) two stage crosslinking of polymers of different compatibility on seeds comprising crosslinked polymer particles, (IX) polymerization shrinkage of polymers, and so on. The diameter of polymer particles 8 is 0.01 to 50 µm (microns), preferably should be 0.1 to 5µm (microns). Polymer particles made by the aforementioned processes possess a high opacifying power as the core component thereof contains aerated voids.

An aqueous suspension is prepared by dispersing the above-mentioned polymer particles in water and is mixed with a water base vehicle to make an opacifying compound. The water base vehicle is an aqueous dispersion or solution of a coating film forming component synthesized by emulsion polymerization or solution polymerization or the like and is supplied in such forms as aqueous solution, emulsion and aqueous dispersion. For the coating film forming component, polymer synthesized by homopolymerization or copolomerization of such monomers as acrylic esters, methacrylic esters, styrene, butadiene, chloroprene, vinylidene, vinyl acetate, etc. can be used. Also, natural or synthesized ruffer latex can be used. Polymers are modified so that they will have a glass transition temperature (Tg) of not over 100°C, preferably -22°C to 25°C.

A water base vehicle in the form of an aqueous dispersion and an emulsion is prepared by dispersing polymers synthesized by homopolymerization of such monomers as ethyl acrylate (EA), butylacrylate (BA), 2 ethylhexyl acrylate (2EHA) and butadiene or by copolymerization of these main monomers with methylmethacrylate (MMA), styrene (ST) or vinylacetate etc.

A water soluble type water base vehicle is a polymer prepared by homopolymerization or copolymerization of the aforememtioned monomers, which are partially substituted with carboxylic group, amino group or amide group and dissolved in water in the form of alkali salt or acid salt or as is. Examples of monomers with carboxylic group are acrylic acid (Aa), methacrylic acid (Maa), monomethylitaconic acid (MMI), 2-carboxyethyl acrylic ester, etc., those with an amino group are N, N'-dimethylaminoethyl acrylate, allyl amine, etc and those with an amide group are (meta) acrylamide. The polymers are dissolved in water by transforming carboxylic acid into salts of alkali metals, amines or ammonia and amino group into salts of hydrochloric acid or acetic acid. If necessary, plasticizers (for example, dibutyl phthalate, polybutene etc), wetting agents (for example, ethylene glycol, propylene glycol, anionic surfactants, nonionic surfactants etc), defoamers, thickeners (e.g., hydroxyethylcellulose, sodium polyacrylate, polyvinyl alcohol, etc.), aqueous wax emulsions (e.g., carnauba wax, polyethylene wax, paraffin wax, chlorinated paraffin wax, etc.) are added.

The above suspension and water base vehicle are mixed arbitrarily in a ratio of between 1 : 9 and 9 : 1, the preferred ratio being between 1 : 3 and 6 : 1.

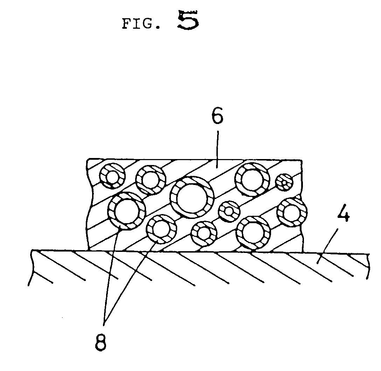

The opacifying compound thus prepared is uniformly applied on coloured sheets by an airknife coater, a roll coater, spraying or the like but controlled to keep the final thickness of the opacifying layer 6 after drying by heated air (50 to 200°C) between 1 and 20 µm (microns), preferably between 3 and 10 µm (microns). As shown in FIG. 5, the obtained opacifying layer 6 has such a structure which hides the colour of coloured sheets 2 and 5 completely and normally gives a white appearance.

The recording sheets 7 constituted as described above have a high hiding property because incident light is scattered by voids embodied in the core of polymer particles 8 in the opacifying layer 6. Also, as the water base vehicle adheres the polymer particles 8 to the colored sheets 2 and 5, the opacifying layer does not detach from the sheets under normal treatment and is easily removed or made transparent or translucent by the inscriptions of a stylus 9. The polymer particles 8 are supplied in a completely dispersed state in water and as the opacifying compound is prepared by mixing this component with a water base vehicle, there is no danger of fire or explosion hazards in the coating process and no need to employ a whitening process.

### BRIEF DESCRIPTION OF DRAWINGS

FIG. 1 is a cross-sectional view of a recording sheet prepared by forming an opacifying layer on a black paper, FIG. 2 is a cross-sectional view of a recording sheet prepared by forming an opacifying layer on a black sheet, FIG. 3 is a cross-sectional view of a recording sheet on which the recording is already made by the inscriptions of a stylus, FIG. 4 is a cross-sectional view of a recording sheet where the recording is performed by obtaining transparency or translucency through compression by the inscriptions of a stylus, and FIG. 5 is a schematic cross-sectional view showing the structure of the opacifying layer of the invention.

### BEST MODE FOR CARRYING OUT THE INVENTION

Embodiments of the present invention will hereinafter be described in detail with reference to the accompanying drawings.

### A) Preparation of a colored sheet

A black ink based on a carbon black dispersion was coated on a high quality paper 3 (manufactured by Oji Paper Co., Ltd., and the area weight thereof is about 150g/m²) shown in FIG. 2 at the rate of 4g solids/m² and then dried, thereby obtaining a black colored paper 5. Also, a black ink was prepared by mixing 50 parts of a commercially available aqueous black ink (manufactured by Dainippon Ink & Chemicals, Inc., and the product name is DICSAF BAG-C805 black) with 50 parts of an acrylic emulsion polymer (copolymer of MMA-Ba-Maa with Tg of -3°C). Then, this black ink was applied on the polyester film 3 (manufactured by Toyobo Co., Ltd., and the thickness thereof is 100 microns) shown in FIG. 2 by a wire rod bar applicator No. 8 thereby to obtain a black sheet 5 on which a black coating film 4 was formed.

### B) Preparation of the opacifying compounds

Water base opacifying compounds in Table 1 were obtained by mixing the following opacifying components with film forming components (sample Nos. 1 through 5 and sample No. 5 is reference data)

**TABLE 1**

| Sample Nos. | | 1 | 2 | 3 | 4 | 5 |
|---|---|---|---|---|---|---|
| opacifying component | Ropaque OP-62 (Regd. T.M.) | 25 | | | | |
| | Voncoat PP-1000 (Regd. T.M.) | | 25 | | | |
| | Ropaque OP-42 (Regd. T.M.) | | | 25 | | |
| | Ropaque OP-85J (Regd. T.M.) | | | | 25 | |
| | Ti-Pure P-610 (Regd. T.M.) | | | | | 25 |
| film forming component | acryl emulsion | 12.5 | | | | |
| | polymer SBR 0629 | | 12.5 | | | |
| | Nikasol TS-662 (Regd. T.M.) | | | 12.5 | | |
| | water soluble | | | | 12.5 | |
| | acrylic polymer Pegar LV-19 (Regd. T.M.) | | | | | 12.5 |
| water | | 20 | 20 | | 30 | 30 |
| auxiliary agent | Fluorad FC-149 (Regd. T.M.) | 0.5 | | | | |
| | chlorinated | | | | | |
| | paraffin wax | | | 4 | | |
| | Nopcosant K (Regd. T.M.) | | | | | 6 |
| | Triton CF-10 (Regd. T.M.) | | | | | 0.5 |

In Table 1, the opacifying component Ropaque is polymer particles products made by Rohm and Haas Co., with a solids content of grade OP-62 37.5%, grade OP-42 40.0%. Ropaque OP-84J is a product of Japan Acrylic Chemical Co., Ltd. and has a solids content of 42.5%. Voncoat PP-1000 is a polymer particles product of Dainippon Ink & Chemicals, Inc., with a solids content of 45%. Ti-Pure P-610 is a powder of titanium dioxide produced by E.I. du Pont de Nemours & Company but is not a polymer particles product.

The acrylic emulsion polymer in the film forming component is a copolymer of BA and Maa in the ratio of 97 : 3 and has a Tg of - 50.5°C with a solids content of 45%. SBR 0629 is a product of Japan Synthetic Rubber Co., Ltd., and is essentially a styrene butadiene latex. Nikasol TS-662 is an adhering type acrylic emulsion polymer manufactured by Nippon Carbide Industries Co., Inc. A water soluble acrylic polymer comprises EA and monomethylitaconic ester in the ratio of 80 : 20, has an average molecular weight of 10,000 with a solid contents of 30% and is supplied as an ammonium salt aqueous solution. Pegar LV-19, a product of Koatsu Gas Kogyo Co., Ltd., is an acrylic emulsion polymer for adhesives, having a solids content of 55.5%.

Auxiliary agent, Fluorad FC-149 is a product of Sumitomo 3M Co., and is an aqueous solution with a 1% active ingredient. Chlorinated paraffin wax is an aqueous emulsion with a 40% solids content. Nopcosant K, is a dispersing agent based on sodium polyacrylate manufactured by San Nopco Co. Ltd. Triton CF-10 is a nonionic surfactant supplied by Rohm and Haas Company.

### C) Preparation of recording sheets

The recording sheet 7 (sample Nos. 6 through 10 and sample No. 10 is reference data) was prepared by applying the opacifying compounds (sample Nos. 1 through 5) on the black paper 5 of FIG. 2 by the wire rod bar applicator No. 12 and drying the opacifying compounds at 50°C for 30 minutes to provide the opacifying layer 6 having a thickness of about 5 microns. Also, the recording sheet 7 (sample No. 8a) was prepared by applying the opacifying compound (sample No. 3) on the black colored sheet 5 of FIG. 2 by the wire rod bar applicator No. 12 and drying the same at 50°C for 30 minutes to provide the opacifying layer 6 having a thickness of about µm (microns). In the drawing, reference numeral 8 depicts the scattered state of polymer particles in the opacifying layer 6.

### D) Recording tests

The recording sheets 7 (sample Nos. 6 through 10) thus prepared were mounted on a tachograph and the recording was performed by the inscriptions with a sapphire needle 9 (see FIGS. 3 and 4). The inscribed recording sheets were taken out and evaluated for such properties as whiteness (visual observation of surface whiteness), appearance (visual observation of surface smoothness), print definition (visual observation of print clearness) and printability (press an adhesive tape on the opacifying layer and pull the same off to observe the layer's resistance to delamination) using as a standard the commercially available tachograph recording paper (manufactured by Yazaki Sogyo Co., Ltd., and the opacifying layer is prepared by applying lacquer coatings based on solvent solution of cellulose acetate and nitrocellulose). Evaluation results are shown on Table 2.

**TABLE 2**

| Sample Nos. | 6 | 7 | 8 | 8a | 9 | 10 (reference data) |
|---|---|---|---|---|---|---|
| whiteness | ο⃝ | Δ | Δ | Δ | ○ | ο⃝ |
| appearance | ○ | ○ | ○ | ○ | ○ | × |
| print definition | ○ | Δ | ○ | ○ | ○ | × |
| printability | ○ | ○ | Δ | ○ | ○ | × |

In Table 2, ο⃝ denotes better than commercial product, ○ denotes equal to commercial product, Δ denotes inferior to commercial product but usable and × denotes remarkably inferior to commercial product and not usable.

Table 2 demonstrates that Sample Nos. 6 and 9 exhibited performance equal to or better than the commercially available tachograph recording paper. Sample Nos. 7, 8 and 8a are appreciably lower in whiteness but are suitable for commercial uses. Sample No. 10 (reference example) was remarkably inferior in respect of appearance, print definition and printability.

As described above, the recording sheet of the present invention is prepared by using the water base opacifying compounds and there is no risk of fire and ignition in the manufacturing process. Therefore, the process of the present invention is safe. Further, since the whitening process is eliminated, the efficiency of productivity can be improved. Furthermore, it is possible to provide the recording sheets whose appearance, print definition and printability are equal to those of the conventional recording sheet.

### INDUSTRIAL APPLICABILITY

As described above, the recording sheet according to the present invention is suitable for use on a tachograph, a dusk meter and other measuring instruments and useful for recording the changes of rotational speed and electrical current or potential in a semipermanent quality.

## Claims

1. A recording sheet comprising a coloured sheet (2 or 5) which is coated with an opacifying compound prepared by mixing an aqueous suspension solution, in which polymer particles (8) embodying voids therein are dispersed, with an aqueous base vehicle which is prepared by dispersing or dissolving a film forming component in water to thereby form an opacifying layer (6) on said coloured sheet.

2. The recording sheet according to claim 1, characterized in that said polymer particles (8) embodying voids therein comprise a core component synthesized by homopolymerization or copolymerization of methacrylic acid and a sheathing component synthesized by homopolymerization or copolymerization of styrene monomer and said polymer particles have a diameter of 0.1 to 5 µm (microns).

3. The recording sheet according to claim 1 or claim 2, characterized in that said film forming component of the water base vehicle has a glass transition temperature (Tg) of not higher than 100°C.

4. The recording sheet according to claim 1, 2 or 3, characterized in that the aqueous suspension and the water base vehicle are mixed in the ratio of between 1 : 3 and 6 : 1.

5. The recording sheet according to claim 1, 2, 3 or 4, characterized in that said opacifying layer (6) has a thickness of 1 to 20 µm (microns).

## Patentansprüche

1. Registrierpapier, das ein farbiges mit einer deckenden Verbindung beschichtetes Blatt (2 oder 5) enthält, welche hergestellt wird durch Mischen einer wäßrigen Suspensions-Lösung, in der Polymerteilchen (8) mit Leerräumen darin dispergiert sind, mit einem auf Wasser basierenden Träger, der durch Dispergieren oder Lösen einer Film-bildenden Komponente in Wasser hergestellt wird, wobei auf dem farbigen Blatt eine Deckschicht (6) gebildet wird.

2. Registrierpapier nach Anspruch 1, dadurch gekennzeichnet, daß die Polymerteilchen (8) mit den Leerräumen darin eine durch Homopolymerisation oder Copolymerisation von Methacrylsäure hergestellte Kernkomponente und eine durch Homopolymerisation von Styrolmonomeren hergestellte Hüllenkomponente enthalten, wobei die Polymerteilchen einen Durchmesser von 0,1 bis 5 µm (Mikrometer) aufweisen.

3. Registrierpapier nach Anspruch 1 oder Anspruch 2, dadurch gekennzeichnet, daß die Film-bildende Komponente des auf Wasser basierenden Trägers eine Glasübergangstemperatur (Tg) von nicht mehr als 100°C aufweist.

4. Registrierpapier nach Anspruch 1, 2 oder 3, dadurch gekennzeichnet, daß die wäßrige Suspension und der auf Wasser basierende Träger im Verhältnis von zwischen 1 : 3 und 6 : 1 vermischt werden.

5. Registrierpapier nach Anspruch 1, 2, 3 oder 4, dadurch gekennzeichnet, daß die Deckschicht (6) eine Dicke von 1 bis 20 µm (Mikrometer) aufweist.

## Revendications

1. Feuille pour enregistrement comprenant une feuille colorée (2 ou 5) qui est revêtue avec un composé opacifiant préparé en mélangeant une solution de suspension aqueuse, dans laquelle des particules polymères (8) renfermant des vides dans celles-ci sont dispersées, avec un véhicule de base aqueuse qui est préparé par dispersion ou dissolution d'un constituant formant un film dans de l'eau pour former par là une couche opacifiante (6) sur ladite feuille colorée.

2. Feuille pour enregistrement selon la revendication 1, caractérisée en ce que lesdites particules polymères (8) renfermant des vides dans celles-ci comprennent un constituant de noyau synthétisé par homopolymérisation ou copolymérisation d'acide méthacrylique et un constituant d'enveloppe synthétisé par homopolymérisation ou copolymérisation de monomère de styrène et lesdites particules polymères ont un diamètre de 0,1 à 5 µm (microns).

3. Feuille pour enregistrement selon la revendication 1 ou la revendication 2, caractérisée en ce que ledit constituant formant un film du véhicule à base d'eau a une température de transition vitreuse (Tg) qui n'est pas supérieure à 100 °C.

4. Feuille pour enregistrement selon la revendication 1, 2 ou 3, caractérisée en ce que la suspension aqueuse et le véhicule à base d'eau sont mélangés dans le rapport compris entre 1:3 et 6:1.

5. Feuille pour enregistrement selon la revendication 1,2,3 ou 4, caractérisée en ce que ladite couche opacifiante (6) a une épaisseur de 1 à 20 µm (microns).
